# EUROPÄISCHE PATENTSCHRIFT

(11) **EP 0 418 526 B1**
(45) Veröffentlichungstag und Bekanntmachung des Hinweises auf die Patenterteilung: **04.05.1994**
(21) Anmeldenummer: 90114840.3
(22) Anmeldetag: 02.08.1990
(51) Int. Cl.: F16C 35/06

(54) **Toleranzring aus polymerem Werkstoff**
Tolerance ring of polymer material
Anneau de tolérance en matériau polymère

(30) Priorität: 16.09.1989 DE 3930970
(43) Veröffentlichungstag der Anmeldung: 27.03.1991
(73) Patentinhaber: INA Wälzlager Schaeffler KG, 91063 Herzogenaurach (DE)
(72) Erfinder: Zernickel, Alexander, Dipl.-Ing., D-8522 Herzogenaurach (DE); Adler, Hellmut, Dipl.-Ing., D-8522 Herzogenaurach (DE)

(56) Entgegenhaltungen:
- EP-A- 0 278 354
- DE-A- 2 624 951
- DE-C- 746 982
- FR-A- 1 086 999
- US-A- 4 608 881

## Beschreibung

Die Erfindung betrifft einen Toleranzring aus polymerem Werkstoff, der zwischen einem Radialwälzlager und einer Sitzfläche auf einer Welle oder in einer Gehäusebohrung angeordnet ist, der sich einerseits wenigstens in einer axialen Richtung an einer radial gerichteten Fläche der Sitzfläche (Welle oder Gehäusebohrung) abstützt und der andererseits als radial gerichtete Fläche einen Bord aufweist, an dem sich ein Laufring des Wälzlagers in derselben axialen Richtung mit einer Stirnfläche abstützt, wobei sich die radial gerichtete Fläche der Sitzfläche und die Stirnfläche des Laufringes radial nicht überdecken.

Derartige Toleranzringe kommen in der Regel dann zum Einsatz, wenn Wälzlager auf grobtolerierten Wellen befestigt werden sollen. Dabei ist es nicht möglich, die Haltekraft des Wälzlagers auf ein definiertes Maß zu begrenzen. Dies ist jedoch dann erforderlich, wenn ein derartiges Wälzlager zur Vermeidung größerer Schäden bei einer vorbestimmten axialen Überbelastung ohne Zerstörung aus seiner festgelegten Position in axialer Richtung verschoben werden soll.

Aus der DE-A-746 982 ist ein Wälzlager bekannt, das mit Hilfe eines Toleranzringes auf einer Welle befestigt ist. Dieses Lager weist jedoch den Nachteil auf, daß es bei axialer Überbelastung wie z. B. durch Stoßeinwirkung durch die radiale Überdeckung von Wellenbund und Laufring axial nicht verschoben werden kann, was zu einer Zerstörung des Lagers mit eventuell weiteren Folgeschäden führt.

Die DE-A-26 24 951 zeigt einen Toleranzring, der im Längsschnitt in seinen Schnittflächen winkelförmig erscheint. Er benötigt für die axiale Abstützung eine Anlagefläche eines Gehäuses, an dem sein Bund anliegt. Daher muß die Gehäusebohrung im Bereich des Toleranzringes zwei unterschiedlich große Innendurchmesser aufweisen, was zu einer aufwendigen Bauweise führt.

Der Erfindung liegt die Aufgabe zugrunde, einen Toleranzring, durch den bei axialer Überlastung eine Zerstörung des Wälzlagers vermieden wird, in einfacher Weise so auszubilden, daß er für die Montage an einer Sitzfläche auf einer Welle oder in einer Gehäusebohrung mit im wesentlichen konstantem Durchmesser geeignet ist.

Diese Aufgabe wird erfindungsgemäß dadurch gelöst, daß die radial gerichtete Fläche der Sitzfläche von einer Ringnut gebildet ist, in die wenigstens ein Vorsprung des Toleranzringes eingreift. Durch diese Maßnahme ergibt sich der Vorteil, daß bei axialer Überlastung die radial gerichtete Fläche des Toleranzringes, gegen die sich die Stirnfläche des Laufringes abstützt, abschert und das Wälzlager ohne Zerstörung axial vom Toleranzring geschoben wird.

Der Toleranzring kann in Lagerlängsrichtung geschlitzt oder zweiteilig ausgebildet sein. Dadurch wird die Montage des Ringes wesentlich erleichtert.

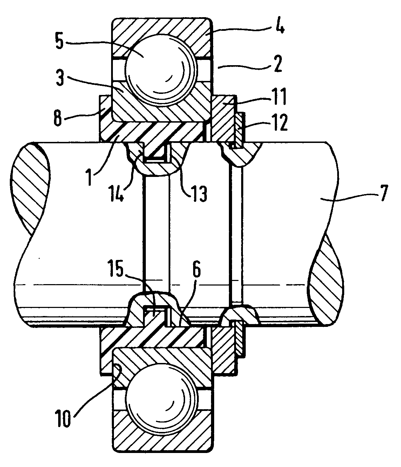

Ein Ausführungsbeispiel der Erfindung ist im Längschnitt in der Zeichnung dargestellt und wird nachfolgend näher beschrieben.

Ein Toleranzring 1, der aus polymerem Werkstoff besteht, ist zwischen einem aus einem Innenring 3, einem Außenring 4, sowie Wälzkörpern 5 bestehenden Wälzlager 2 und einer Sitzfläche 6 auf einer Welle 7 angeordnet.

Der Toleranzring 1 stützt sich in einer axialen Richtung mit einem Vorsprung 15 an einer radial gerichteten Fläche 14 einer Ringnut 13 der Welle 7 ab. In derselben axialen Richtung stützt sich der Innenring 3 mit seiner Stirnfläche 10 an einem Bord 8 des Toleranzringes 1 ab. In der anderen axialen Richtung ist das Wälzlager 2 mit Hilfe einer Scheibe 11 und eines Sprengringes 12 gegenüber der Welle 7 festgelegt.

Wie die Zeichnung zeigt, sind dabei die Ringnut 13 der Welle 7 und die Stirnfläche 10 des Innenringes 3 in radialer Richtung überdeckungsfrei angeordnet.

## Patentansprüche

1. Toleranzring (1) aus polymerem Werkstoff, der zwischen einem Radialwälzlager (2) und einer Sitzfläche (6) auf einer Welle (7) oder in einer Gehäusebohrung angeordnet ist, der sich einerseits wenigstens in einer axialen Richtung an einer radial gerichteten Fläche (14) der Sitzfläche (6) (Welle oder Gehäusebohrung) abstützt und der andererseits als radial gerichtete Fläche einen Bord (8) aufweist, an dem sich ein Laufring (3) des Wälzlagers (2) in derselben axialen Richtung mit einer Stirnfläche (10) abstützt, wobei sich die radial gerichtete Fläche (14) der Sitzfläche (6) und die Stirnfläche (10) des Laufringes (3) radial nicht überdecken, **dadurch gekennzeichnet**, daß die radial gerichtete Fläche (14) der Sitzfläche (6) von einer Ringnut (13) gebildet ist, in die wenigstens ein Vorsprung (15) des Toleranzringes (1) eingreift.

2. Toleranzring nach Anspruch 1, **dadurch gekennzeichnet**, daß er in Längsrichtung geschlitzt oder zweiteilig ausgebildet ist.

## Claims

1. Tolerance ring (1) of a polymeric material which is arranged between a radial rolling bearing (2) and a seating face (6) of a shaft (7) or in a housing bore and which, on the one side, is supported in one axial direction on a radially oriented surface (14) of the seating face (6) (shaft or housing bore), and, on the other side, comprises a radially oriented surface in the form of a flange (8) on which an end face (10) of a race ring (3) of the rolling bearing (2) is supported in the same axial direction, the radially oriented surface (14) of the seating face (6) and the end face (10) of the race ring (3) not overlapping each other in the radial direction, characterized in that the radially oriented surface (14) of the seating face (6) is formed by an annular groove (13) in which at least one projection (15) of the tolerance ring (1) engages.

2. Tolerance ring according to claim 1, characterized in that it is split or made in two parts in the longitudinal direction.

## Revendications

1. Bague intermédiaire (1) en matière polymère agencée sur un arbre (7) ou dans un alésage de boîtier entre un palier radial à roulement (2) et une face de siège (6), ladite bague intermédiaire (1) s'appuyant d'un côté, au moins dans une direction axiale, contre une surface radialement orientée (14) de la face de siège (6) (arbre ou alésage de boîtier) et comprenant de l'autre côté, en tant que surface radialement orientée, un rebord (8) contre lequel s'appuie dans la même direction axiale une face frontale (10) d'une bague de roulement (3) du palier à roulement (2), la surface radialement orientée (14) de la face de siège (6) et la face frontale (10) de la bague de roulement (3) ne se recouvrant pas en direction radiale, caractérisée en ce que la surface radialement orientée (14) de la face de siège (6) est formée par une rainure annulaire (13) dans laquelle s'engage au moins une saillie (15) de la bague intermédiaire (1).

2. Bague intermédiaire selon la revendication 1, caractérisée en ce qu'elle est fendue ou est faite en deux parties dans la direction longitudinale.
